# EUROPÄISCHE PATENTSCHRIFT

(11) **EP 2 137 423 B1**
(45) Veröffentlichungstag und Bekanntmachung des Hinweises auf die Patenterteilung: **15.06.2011**
(21) Anmeldenummer: 08715996.8
(22) Anmeldetag: 22.02.2008
(51) Int. Cl.: F16D 23/06

(54) **SCHALTKUPPLUNGSANORDNUNG**
CLUTCH ASSEMBLY
SYSTÈME D'EMBRAYAGE

(30) Priorität: 22.02.2007 DE 102007010307
(43) Veröffentlichungstag der Anmeldung: 30.12.2009
(73) Patentinhaber: HOERBIGER SynchronTechnik GmbH & Co. KG, 71720 Oberstenfeld (DE)
(72) Erfinder: LEDETZKY, Erol, 74074 Heilbronn (DE); KRENKLER, Jochen, 74632 Neuenstein (DE)
(74) Vertreter: Prinz & Partner
(86) Internationale Anmeldenummer: PCT/EP2008/001445
(87) Internationale Veröffentlichungsnummer: WO 2008/101729

(56) Entgegenhaltungen:
- EP-A- 1 826 431
- EP-A- 1 900 956
- DE-A1-102005 028 803
- GB-A- 2 048 399

## Beschreibung

Die vorliegende Erfindung betrifft eine Schaltkupplungsanordnung zur drehfesten Verbindung einer Welle mit einem daran gelagerten Drehglied, wie einem Losrad, gemäß dem Oberbegriff des Anspruchs 1.

Eine derartige Schaltkupplungsanordnung ist bekannt aus dem Dokument DE 10 2005 025 569 A1.

Die gattungsgemäße GB 2 048 399 A zeigt eine Synchronisierungseinrichtung, bei der ein Sperrglied über eine Sperrflächenpaarung mit einem Synchronring gekoppelt ist, so dass eine Bewegung einer Schaltmuffe in axialer Richtung verhindert ist, bis eine Synchronisierung erzielt ist.

In der DE 10 2005 028 803 A1 ist eine Synchronisierungseinrichtung gezeigt, bei der ein Synchronring durch eine entsprechende Gestaltung eines Druckstückes an das Druckstück drehgekoppelt ist, wenn sich die Schaltmuffe zwischen der Synchronisierstellung und der geschalteten Stellung befindet.

Schaltkupplungsanordnungen der gattungsgemäßen Art werden in Vorgelegegetrieben für Kraftfahrzeuge verwendet. Die Vorgelegegetriebe sind dabei als Stufengetriebe mit einer Mehrzahl von Gangstufen ausgebildet. Jeder Gangstufe ist ein Radsatz zugeordnet, der ein Festrad und ein Losrad aufweist. Die Losräder sind jeweils an einer der Wellen des Getriebes drehbar gelagert und mittels einer Schaltkupplung mit der Welle verbindbar (um die Gangstufe zu schalten), und hiervon lösbar (um die Gangstufe auszulegen).

Die Schaltkupplungen sind heutzutage in der Regel als Synchronkupplungen ausgebildet, bei denen die Drehzahlen von Welle und Drehglied miteinander synchronisiert werden, bevor ein Formschluss dazwischen eingerichtet wird. Ferner sind die Synchronkupplungen heutzutage in der Regel als Sperr-Synchronkupplungen ausgebildet, bei denen ein Sperrmechanismus dafür sorgt, dass der Eingriff der Verzahnungen von Schaltmuffe und Kupplungskörper erst dann ermöglicht wird, wenn die Drehzahlen von Welle und Drehglied miteinander synchronisiert sind.

Der heutzutage gebräuchlichste Sperrmechanismus weist an dem Außenumfang des Synchronringes eine Sperrverzahnung auf. Der Synchronring ist dabei an der Welle (bzw. einer hieran festgelegten Führungsmuffe, die auch als Synchronkörper bezeichnet wird) begrenzt beweglich gelagert. In einer Freigabestellung kann die Schaltmuffenverzahnung durch die Sperrverzahnung des Synchronringes hindurch geführt werden, um den Formschluss mit dem Kupplungskörper herzustellen. In der Sperrstellung ist der Synchronring so verdreht, dass die Schaltmuffe daran gehindert ist, in axialer Richtung auf den Kupplungskörper zu bewegt zu werden. Die Sperrstellung des Synchronringes wird dadurch erreicht, dass der Synchronring auf Grund der aufgewendeten axialen Schaltkraft in Reibeingriff gelangt mit dem zugeordneten Kupplungskörper (oder einer anderen zugeordneten Reibfläche), wodurch der Synchronring in Drehrichtung mitgenommen wird und dadurch in die Sperrstellung mitgenommen wird (umschlägt). Erst wenn die Drehzahlen synchronisiert sind, ist die Reibkraft so weit verringert, dass ein Zurückdrehen des Synchronringes auf Grund der Schaltkraft möglich ist, so dass die Schaltmuffe dann durch die in die Freigabestellung zurückgedrehte Verzahnung des Synchronringes hindurch geschoben werden kann.

Bei dieser Art von Synchronisierung ist der Synchronring vergleichsweise aufwändig herzustellen.

In der eingangs erwähnten DE 10 2005 025 569 A1 wird ein Sperrmechanismus vorgeschlagen, der unter Verwendung eines Druckstückes realisiert ist.

Ein solches Druckstück bzw. ein solcher Stein ist bei Synchronkupplungsanordnungen häufig vorhanden, um die Schaltmuffe in eine Neutralstellung zu rastieren. In dem Dokument DE 10 2005 025 569 A1 wird nun vorgeschlagen, den Synchronring am Außenumfang ohne Sperrverzahnung auszubilden. Hingegen ist an dem Innenumfang des Synchronringes eine Mehrzahl von Keilflächen vorgesehen, die entsprechenden Keilflächen der Druckstücke zugeordnet sind.

Bei Aufbringen einer Schaltkraft versucht die Schaltmuffe, das Druckstück in radialer Richtung aus der Rastiernut weg zu bewegen und drückt gleichzeitig den Synchronring in axialer Richtung an eine Reibfläche an (Ansynchronisieren). Dabei verdreht sich der Synchronring, bis die Keilflächenpaarungen in Eingriff gelangen, derart, dass die Keilflächen einem radialen Wegdrücken des Druckstückes entgegenwirken. Demzufolge kann die Schaltmuffe nicht weiter axial verschoben werden und wird auf diese Art und Weise gesperrt. Erst wenn die Drehzahlen von Welle und Losrad synchronisiert sind, kann auf Grund der dann verringerten Reibkraft der Synchronring mittels der axial auf die Schaltmuffe aufgewendeten Schaltkraft zurückverdreht werden, so dass das Druckstück in radialer Richtung nach innen weggedrückt werden kann. Die Schaltmuffe kann demzufolge in axialer Richtung weiter verschoben werden, um mit dem Kupplungskörper in Eingriff zu gelangen.

Ein ähnlicher Sperrmechanismus für eine Synchronkupplung ist bekannt aus dem Dokument DE 29 15 965 C2.

Auch bei dieser Art von Synchronkupplungsanordnung ist der Synchronring jedoch vergleichsweise aufwändig herzustellen.

Es ist demzufolge die Aufgabe der Erfindung, eine Schaltkupplungsanordnung anzugeben, bei der der Synchronring kostengünstig herstellbar ist, bei optimierter Funktionsweise des Sperrmechanismus.

Diese Aufgabe wird bei der eingangs genannten Schaltkupplungsanordnung die Merkmale des Anspruchs 1 gelöst.

Bei der erfindungsgemäßen Schaltkupplungsanordnung kann der Synchronring wie im Stand der Technik ohne eigene Sperrverzahnung am Außenumfang ausgebildet werden. Zudem ist es möglich, den Synchronring auch ohne sonstige Keilflächen auszubilden. Es ist lediglich notwendig, den Synchronring in Drehrichtung mit dem Synchronglied zu koppeln. Das Synchronglied wiederum steht mit dem Sperrglied über die Sperrflächenpaarung in Drehrichtung in Eingriff.

Demzufolge kann der Synchronring konstruktiv besonders einfach ausgelegt werden, da eine Herstellung auf Grund einfacher Herstellungsverfahren (aus Blech, als Sinterbauteil etc.) möglich ist.

Ferner können sowohl das Sperrglied als auch das Synchronglied jeweils vergleichsweise einfach ausgebildet sein, so dass sie kostengünstig herstellbar sind.

Die Aufgabe wird somit vollkommen gelöst.

Gemäß einer besonders bevorzugten Ausführungsform ist das Synchronglied in Drehrichtung in Bezug auf eine mit der Welle verbundene Führungsmuffe zwischen einer Freigabeposition und einer Sperrposition begrenzt beweglich gelagert, derart, dass das Synchronglied in der Sperrposition eine Bewegung des Sperrgliedes aus der Rastiernut heraus und somit eine axiale Bewegung der Schaltmuffe verhindert.

Generell ist es zwar auch denkbar, dass der Synchronring in Bezug auf die Führungsmuffe begrenzt beweglich gelagert ist. Die Ausbildung der Führungsmuffe und des Synchrongliedes so, dass das Synchronglied zwischen der Sperrposition und der Freigabeposition hin und her bewegbar ist, ermöglicht eine weitere Vereinfachung der Formgebung des Synchronringes.

Gemäß einer weiteren bevorzugten Ausführungsform weist der Synchronring eine Ausnehmung auf, innerhalb der ein Abschnitt des Synchrongliedes zur Kopplung mit dem Synchronring in Drehrichtung angeordnet ist.

Bei dieser Ausführungsform erfolgt die Kopplung zwischen Synchronring und Synchronglied in Drehrichtung über Ausnehmungen in dem Synchronring. Derartige Ausnehmungen können vergleichsweise einfach hergestellt werden. Der in die Ausnehmung greifende Abschnitt des Synchrongliedes kann ein Vorsprung sein, kann jedoch auch ein Abschnitt eines als massiver Körper ausgebildeten Synchrongliedes sein.

Von besonderem Vorzug ist es, wenn die Ausnehmung des Synchronringes als axiale Ausnehmung ausgebildet ist. Dies ermöglicht eine weitere Vereinfachung des Herstellungsverfahrens. Die Ausnehmung des Synchronringes kann jedoch auch gebildet sein durch zwei radial oder axial vorstehende Nasen, zwischen die ein Abschnitt des Synchrongliedes greift.

Umgekehrt betrachtet ist es auch möglich, dass der Synchronring einen Vorsprung aufweist, der zur Kopplung mit dem Synchronglied in Drehrichtung in eine Ausnehmung des Synchrongliedes greift.

Gemäß einer weiteren bevorzugten Ausführungsform ist das Sperrglied in axialer Richtung an der Schaltmuffe geführt.

Diese Ausführungsform wird unabhängig von dem Bereitstellen eines Synchrongliedes als eigene Erfindung angesehen.

Die axiale Führung des Sperrgliedes erfolgt dabei vorzugsweise nicht nur dann, wenn das Sperrglied in die Rastiernut eingreift, sondern auch dann, wenn die Schaltmuffe das Sperrglied radial weggedrückt hat, so dass das Sperrglied nicht mehr in die Rastiernut greift.

Insgesamt kann so eine deutlich stabilere Führung der Komponenten der Schaltkupplungsanordnung erzielt werden.

Von besonderem Vorteil ist es dabei, wenn die Schaltmuffe eine radiale Ausnehmung aufweist, in der das Sperrglied axial geführt ist.

Die radiale Ausnehmung kann dabei durch Ausnehmungen an Zähnen der ersten Verzahnung ausgebildet sein. Derartige axiale Führungsnuten an der Innenseite der Schaltmuffe lassen sich konstruktiv vergleichsweise einfach fertigen.

Gemäß einer weiteren bevorzugten Ausführungsform weist das Sperrglied wenigstens eine Führungsnase auf, die zur axialen Führung an der Schaltmuffe in eine Zahnlücke der ersten Verzahnung greift.

Die Führungsnase kann sich dabei in radialer Richtung über einen Abschnitt des Sperrgliedes hinaus erstrecken, der mit der Rastiernut der Schaltmuffe in Eingriff tritt.

Auf diese Weise kann eine axiale Führung an der Schaltmuffe erreicht werden, ohne dass an einzelnen Zähnen der Verzahnung der Schaltmuffe größere Ausnehmungen vorzusehen sind. Insgesamt kann die Schaltmuffe im Wesentlichen ohne Nachteile hinsichtlich der Festigkeit ausgebildet werden.

Insgesamt ist es ferner bevorzugt, wenn das Sperrglied in radialer Richtung gegenüber der Welle oder der Führungsmuffe elastisch vorgespannt und in die Rastiernut gedrückt ist.

Die Vorspannung kann dabei beispielsweise mittels einer Feder erfolgen, die zwischen dem Sperrglied und der Welle oder der Führungsmuffe angeordnet ist.

Gemäß einer bevorzugten Ausführungsform ist das Sperrglied in radialer Richtung gegenüber dem Synchronglied elastisch vorgespannt und in die Rastiernut gedrückt.

Da das Synchronglied ohnehin an der Führungsmuffe gelagert ist, sind demzufolge für die elastische Vorspannung des Sperrgliedes keine weiteren Maßnahmen an der Führungsmuffe erforderlich.

Gemäß einer besonders bevorzugten Ausführungsform weist das Sperrglied eine Ausnehmung zur Aufnahme eines Federelementes zur Realisierung der elastischen Vorspannung auf.

Auf diese Weise kann ein Federelement wie beispielsweise eine Schraubenfeder einfach montiert und im Betrieb sicher geführt werden.

Von besonderem Vorteil ist es ferner, wenn das Sperrglied und das Synchronglied als eine vormontierte Einheit ausgebildet sind.

Die Montage kann hierdurch deutlich vereinfacht werden.

Von besonderem Vorteil ist es dabei, wenn die vormontierte Einheit Federmittel zur elastischen Vorspannung des Sperrgliedes gegenüber dem Synchronglied aufweist.

Bei dieser Ausführungsform bilden Sperrglied, Synchronglied und Federmittel eine vormontierte Einheit, die mit geringem Montageaufwand in die Führungsmuffe eingesetzt werden kann.

Insgesamt ist es ferner bevorzugt, wenn das Sperrglied und/oder das Synchronglied als Sinterteil ausgebildet sind.

Auf diese Weise ist eine kostengünstige Fertigung möglich.

Auch der Synchronring kann vorzugsweise als Sinterteil ausgebildet sein.

Gemäß einer besonders bevorzugten Ausführungsform ist das Synchronglied als Blechbiegeteil ausgebildet.

Bei dieser Ausführungsform kann das Synchronglied als eine Art Käfig für das Sperrglied und gegebenenfalls die Federmittel dienen.

Auch das Sperrglied kann als Blechteil bzw. Blechbiegeteil ausgebildet sein. Ferner ist es auch denkbar, den Synchronring als Blechteil auszubilden.

Ferner ist es denkbar, das Sperrglied und/oder das Synchronglied als Schmiedeteile auszubilden.

Insgesamt ist es ferner bevorzugt, wenn die Schaltkupplungsanordnung eine Mehrzahl von Sperr-Synchronisierungseinrichtungen aufweist, die jeweils ein Sperrglied und ein Synchronglied aufweisen und über den Umfang der Schaltkupplungsanordnung verteilt angeordnet sind.

Mit der erfindungsgemäßen Schaltkupplungsanordnung lässt sich, je nach Ausführungsform, wenigstens einer der folgenden Vorteile erzielen:
- Der Synchronring ist wesentlich einfacher und zu geringeren Kosten herstellbar; ferner kann der Synchronring robuster ausgebildet werden. Der Einbauraum kann verringert werden.
- Da der Synchronring keinen radial vorstehenden Bund für eine Sperrverzahnung benötigt, kann die Länge der Verzahnung der Führungsmuffe (an der die Schaltmuffe axial geführt ist) in axialer Richtung länger ausgebildet werden, wodurch die Führung der Schaltmuffe verbessert wird (weniger Verkippen); ferner können Anschlagzähne der Schaltmuffe (die den axialen Schaltweg der Schaltmuffe gegenüber dem Kupplungskörper begrenzen) verklemmungsfrei bis zum Kupplungskörper geführt werden. Für eine Übertragung von Drehmoment über den Synchronring kann hierdurch ferner die Festigkeit erhöht werden.
- Das Sperrglied und das Synchronglied können für unterschiedliche Sperr-Synchronisierungseinrichtungen identisch ausgebildet sein. Sie können insbesondere auch für die beiden Seiten der Schaltkupplungsanordnung identisch ausgebildet sein. Mit anderen Worten können das Sperrglied und das Synchronglied symmetrisch in Bezug auf eine Querschnittsebene und/oder in Bezug auf eine Längsschnittebene ausgebildet sein.
- Ferner kann der Synchronring für Einfach- und für Mehrfachkegelsynchronisierungen identisch ausgebildet sein.
- Der Sperrmechanismus ist von dem Einspurmechanismus entkoppelt, so dass die Anspitzung der Schaltmuffe zum Einspuren in den Kupplungskörper ohne Rücksicht auf einen Sperrwinkel frei gewählt werden kann. Dadurch kann der Komfort beim Einspuren erhöht werden, insbesondere durch spitzere Einspurwinkel.
- Eine Synchronringabhebung ist (beispielsweise durch eine Abhebe-Keilflächenpaarung) vergleichsweise einfach realisierbar. Das Schleppmoment kann verringert werden.
- Die Einspurverzahnung der Schaltmuffe kann in einer Ebene ausgebildet werden, was die Herstellungskosten der Schaltmuffe verringert.
- Bei Ausbildung von Fasen an der Rastiernut kann insbesondere der Verlauf des Entsperrvorganges geeignet beeinflusst werden. So genannte "Doppeleingriffe", die beim vorzeitigen Einspuren des Schaltmuffe in den Kupplungskörper vor Drehzahlgleichheit auftreten können, können demzufolge vermieden werden. Durch eine derart gestufte Rastiernut (mit Fase) kann ein untersperrendes System erzeugt werden, das ein sich wieder beschleunigendes Rad abbremsen kann. Kaltkratzen und Schwingungskratzen können verringert werden.
- Es kann vermieden werden, dass an der ersten Verzahnung der Schaltmuffe vorgesehene Hinterlegungen in Kontakt mit dem Synchronring gelangen, wie es bei Synchronringen mit Sperr-Verzahnung der Fall ist.
- Der Synchronring kann über die Kopplung mit dem Synchronglied zentriert werden. Ein Zentrierdurchmesser am Synchronring und an der Führungsmuffe können gegebenenfalls entfallen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine Ausführungsform einer erfindungsgemäßen Schaltkupplungsanordnung;
- Fig. 2: eine Schnittansicht entlang der Linie II-II von Fig. 1;
- Fig. 3: die Schaltkupplungsanordnung der Fig. 1 in einer Sperrstellung;
- Fig. 4: die Schaltkupplungsanordnung der Fig. 2 in Sperrstellung;
- Fig. 5: die Schaltkupplungsanordnung der Fig. 1 im Augenblick des Entsper- rens;
- Fig. 6: die Schaltkupplungsanordnung der Fig. 2 im Augenblick des Entsper- rens;
- Fig. 7: die Schaltkupplungsanordnung der Fig. 1 im geschalteten Zustand;
- Fig. 8: die Schaltkupplungsanordnung der Fig. 2 im geschalteten Zustand;
- Fig. 9: eine perspektivische Schnittansicht einer weiteren Ausführungsform einer erfindungsgemäßen Schaltkupplungsanordnung;
- Fig. 10: eine perspektivische Schnittansicht einer weiteren Ausführungsform einer erfindungsgemäßen Schaltkupplungsanordnung;
- Fig. 11: eine perspektivische Schnittansicht einer weiteren Ausführungsform einer erfindungsgemäßen Schaltkupplungsanordnung;
- Fig. 12: eine schematische Darstellung einer vormontierten Sperreinheit in Verbindung mit einem Abschnitt eines Synchronringes;
- Fig. 13: eine Schnittansicht entlang der Linie XIII-XIII von Fig. 12;
- Fig. 14: eine alternative Kombination von vormontierter Sperreinheit mit einem Synchronring;
- Fig. 15: eine Detailansicht XV von Fig. 14;
- Fig. 16: eine perspektivische Darstellung eines Sperrgliedes einer erfindungsge- mäßen Schaltkupplungsanordnung;
- Fig. 17: eine perspektivische Darstellung einer alternativen Ausführungsform eines Sperrgliedes einer erfindungsgemäßen Schaltkupplungsanord- nung;
- Fig. 18: eine schematische Querschnittsansicht einer weiteren Ausführungs- form einer erfindungsgemäßen Schaltkupplungsanordnung;
- Fig. 19: eine schematische Darstellung einer abgewandelten Rastiernut einer Schaltmuffe einer erfindungsgemäßen Schaltkupplungsanordnung;
- Fig. 20: eine der Fig. 2 entsprechende Schnittansicht einer weiteren Ausfüh- rungsform einer erfindungsgemäßen Schaltkupplungsanordnung;
- Fig. 21: eine Schnittansicht entlang der Linie XXI-XXI von Fig. 20;
- Fig. 22: eine schematische Darstellung einer weiteren Ausführungsform einer erfindungsgemäßen Schaltkupplungsanordnung;
- Fig. 23: eine der Fig. 2 entsprechende Darstellung einer weiteren Ausführungs- form einer erfindungsgemäßen Schaltkupplungsanordnung;
- Fig. 24: eine Schnittansicht entlang der Linie XXIV-XXIV von Fig. 23;
- Fig. 25: eine der Fig. 2 entsprechende Darstellung einer weiteren Ausführungs- form einer erfindungsgemäßen Schaltkupplungsanordnung;
- Fig. 26: eine schematische Darstellung eines Synchronringes für eine erfin- dungsgemäße Schaltkupplungsanordnung;
- Fig. 27: eine schematische Darstellung einer weiteren Ausführungsform eines Synchronringes für eine erfindungsgemäße Schaltkupplungsanord- nung; und
- Fig. 28: eine schematische Ansicht einer weiteren Ausführungsform eines Synchronringes für eine erfindungsgemäße Schaltkupplungsanord- nung.

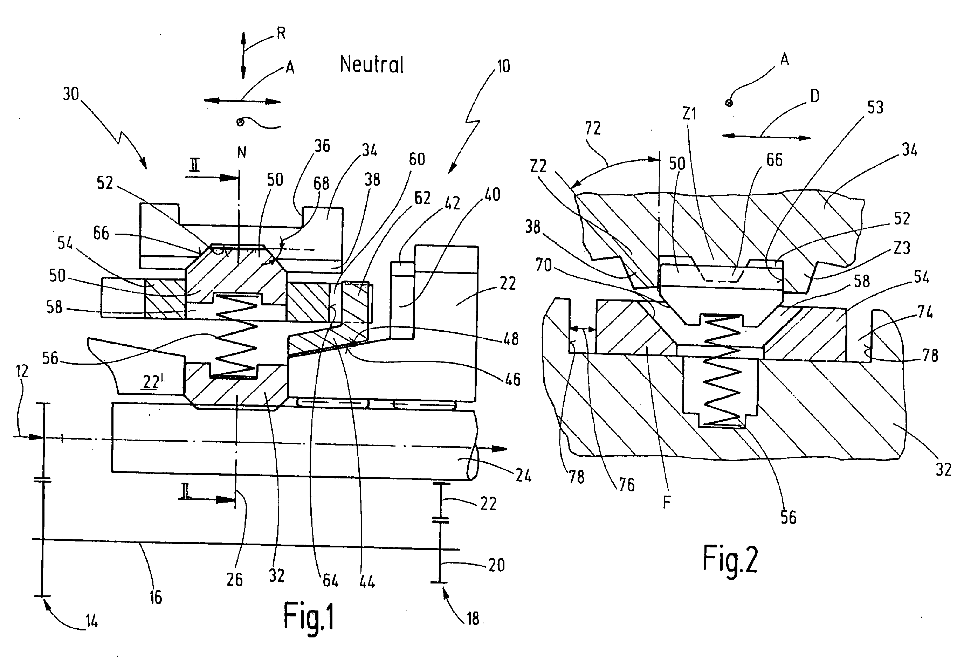

In Fig. 1 und 2 ist ein Getriebe für ein Kraftfahrzeug generell mit 10 bezeichnet.

Das Getriebe 10 weist eine Eingangswelle 12 auf, die über einen Konstanten-Radsatz 14 mit einer hierzu parallelen Vorgelegewelle 16 in Verbindung steht.

Eine Ausgangswelle 24 ist koaxial zu der Eingangswelle 12 angeordnet. Eine Mehrzahl von Schaltradsätzen 18 ist an der Vorgelegewelle bzw. der Ausgangswelle 24 angeordnet. In Fig. 1 ist aus Gründen einer übersichtlicheren Darstellung nur ein Schaltradsatz 18 gezeigt, der ein Festrad 20 aufweist, das mit der Vorgelegewelle 16 verbunden ist. Der Schaltradsatz 18 weist ferner ein Losrad 22 auf, das drehbar an der Ausgangswelle 24 gelagert ist.

Ein weiteres Losrad 22' ist in Fig. 1 lediglich schematisch angedeutet.

Es versteht sich, dass die gezeigte, für den Längseinbau in einem Fahrzeug ausgelegte Getriebeanordnung lediglich beispielhafter Natur ist. Auf Getriebe mit anderen Topologien (beispielsweise für den Front-Quereinbau oder als Dreiwellengetriebe) ist die Erfindung gleichfalls anwendbar.

Eine erste Ausführungsform einer erfindungsgemäßen Schaltkupplungsanordnung ist in Fig. 1 generell mit 30 bezeichnet.

Die Schaltkupplungsanordnung 30 dient dazu, das Losrad 22 oder das Losrad 22' mit der Ausgangswelle 24 zu verbinden. Die Schaltkupplungsanordnung 30 ist folglich als Schaltkupplungspaket mit zwei einzelnen Schaltkupplungen ausgebildet. Aus Gründen einer einfachen Darstellung wird im Folgenden lediglich Bezug genommen auf die Funktion der Schaltkupplungsanordnung 30 in Bezug auf das Losrad 22. Es versteht sich jedoch, dass die nachfolgende Beschreibung gleichermaßen auf das Losrad 22' anwendbar ist.

Die Schaltkupplungsanordnung 30 beinhaltet eine Führungsmuffe (auch Synchronkörper genannt) 32, die an der Ausgangswelle 24 festgelegt ist (beispielsweise mittels einer geeigneten Verzahnung). Die Führungsmuffe 32 weist ferner eine in Fig. 1 nicht näher bezeichnete Außenverzahnung auf.

An der Führungsmuffe 32 ist eine Schaltmuffe 34 in axialer Richtung A verschieblich gelagert. Die Schaltmuffe 34 weist in an sich bekannter Weise eine äußere Radialnut 36 für den Eingriff einer Schaltgabel oder dergleichen auf. Ferner weist die Schaltmuffe 34 an ihrem Innenumfang eine Innenverzahnung 38 auf, die mit der Außenverzahnung der Führungsmuffe 32 in Eingriff steht.

Die Schaltkupplungsanordnung 30 beinhaltet ferner einen Kupplungskörper 40, der fest mit dem zugeordneten Losrad 22 verbunden ist. Der Kupplungskörper 40 weist eine Außenverzahnung 42 auf, auf die die Innenverzahnung 38 der Schaltmuffe 34 aufgeschoben werden kann, um in Drehrichtung D eine formschlüssige Verbindung zwischen der Welle 24 und dem Losrad 22 einzurichten. Obgleich die Führungsmuffe 32 und die Welle 24 zum einen und das Losrad 22 und der Kupplungskörper 40 zum anderen jeweils als einzelne Bauelemente dargestellt sind, ist es erfindungsgemäß auch möglich, diese einstückig auszubilden.

Die Schaltkupplungsanordnung 30 weist ferner einen Synchronring 44 auf. Der Synchronring 44 besitzt in an sich bekannter Weise eine Reibfläche 46, die mit einer Gegenreibfläche 48 des Losrades 22 (oder des Kupplungskörpers 40 oder eines dazwischen liegenden Konusrings) zusammmenwirkt.

Die Schaltkupplungsanordnung 30 weist ferner ein Sperrglied 50 auf, das in radialer Richtung R beweglich gelagert ist. Das Sperrglied 50 greift in der in Fig. 1 und 2 gezeigten Neutralstellung in eine Rastiernut 52 am Innenumfang der Schaltmuffe 34. Wie es in Fig. 2 zu sehen ist, ist das Sperrglied 50 am Innenumfang der Schaltmuffe 34 in axialer Richtung geführt. Die Schaltmuffe 34 weist zu diesem Zweck an ihrem Innenumfang eine axiale Führungsnut 53 auf. Die axiale Führungsnut 53 ist zwischen zwei Zähnen Z2, Z3 der Innenverzahnung 38 gebildet. Ein dazwischen liegender Zahn Z1 ist in radialer Richtung etwas zurückgenommen, um eine axiale Führung des Sperrgliedes 50 auch dann zu gewährleisten, wenn das Sperrglied 50 aus der Rastiernut 52 herausgedrückt ist (was nachstehend noch beschrieben werden wird).

Die Schaltkupplungsanordnung 30 weist ferner ein Synchronglied 54 auf, das als ein Bauteil getrennt von dem Sperrglied 50 und getrennt von dem Synchronring 44 ausgebildet ist.

Die Schaltkupplungsanordnung 30 weist ferner Federmittel 56 auf, die dazu dienen, das Sperrglied 50 in radialer Richtung nach außen zu drücken, in der gezeigten Neutralposition in die Rastiernut 52 hinein.

Das Synchronglied 54 ist an der Führungsmuffe 32 gelagert, und zwar sowohl in axialer Richtung A als auch in Drehrichtung D begrenzt beweglich, wie es insbesondere auch in Fig. 2 zu sehen ist.

Ferner weist das Synchronglied 54 eine Aufnahme 58 für das Sperrglied 50 auf. Mittels der Sperrgliedaufnahme 58 sind das Synchronglied 54 und das Sperrglied 50 in axialer Richtung A im Wesentlichen spielfrei gekoppelt. Ferner weist das Synchronglied 54 Mitnahmemittel 60 auf, die mit Mitnahmemitteln 62 des Synchronringes 44 zusammenwirken. Durch die Mitnahmemittel 60, 62 sind das Synchronglied 54 und der Synchronring 44 in Drehrichtung im Wesentlichen spielfrei miteinander gekoppelt.

Ferner weist das Synchronglied 54 eine Andrückfläche 64 auf, mittels der der Synchronring 44 in axialer Richtung A angedrückt werden kann, um die Reibflächen 46, 48 in Reibkontakt zu bringen. In der dargestellten Ausführungsform sind die Mitnahmemittel 60 des Synchrongliedes 54 als eine axiale Ausnehmung gebildet, deren axiale Stirnfläche die Andrückfläche 64 bildet. Der Synchronring 44 weist einen konischen Ringkörper und hiervon radial vorstehende Abschnitte auf, die als Mitnahmemittel 62 ausgebildet sind und in die Ausnehmung 60 des Synchrongliedes 54 greifen. Ferner wird der Synchronring 44 über diese Vorsprünge in axialer Richtung A angedrückt.

Wie es in Fig. 1 zu sehen ist, sind die Schaltmuffe 34 und das Sperrglied 50 in axialer Richtung A über eine Keilflächenpaarung 66 gekoppelt, die einen Teil der Rastiernut 52 bildet. Ferner ist in Fig. 2 zu erkennen, dass das Sperrglied 50 und das Synchronglied 54 in Drehrichtung D über eine zweite Keilflächenpaarung 70 miteinander gekoppelt sind. Der Winkel der ersten Keilflächenpaarung 66 wird nachstehend als Rastierwinkel 68 bezeichnet und kann beispielsweise im Bereich von 30° bis 70°, insbesondere von 40° bis 60° und bevorzugt von 50° bis 55° liegen. Ferner bildet die zweite Keilflächenpaarung 70 zwischen dem Sperrglied 50 und dem Synchronglied 54 einen Winkel, der nachstehend als Sperrwinkel bezeichnet wird und im Bereich von 30° bis 70° liegen kann, insbesondere im Bereich von 40° bis 60°.

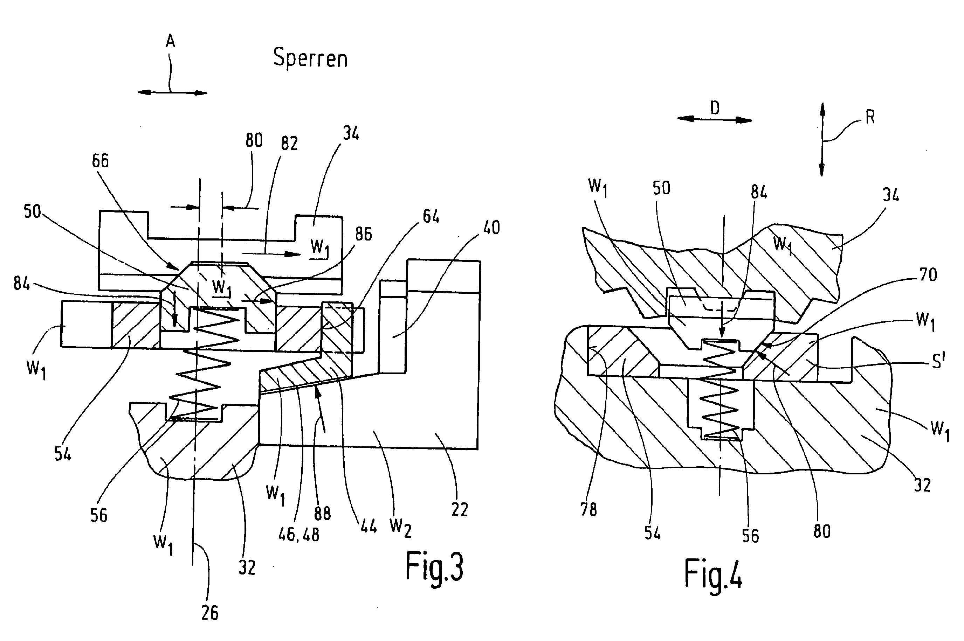

Wie es in Fig. 2 zu sehen ist, ist das Synchronglied 54 an der Führungsmuffe 32 in einer Synchrongliedaufnahme 74 in Drehrichtung D begrenzt beweglich gelagert. Genauer gesagt ist das Synchronglied 54 zwischen einer in Fig. 2 dargestellten Neutral- bzw. Freigabeposition F und einer Sperrposition S (siehe Fig. 4) bewegbar. Der hierfür erforderliche Umschlagweg ist in Fig. 2 mit 76 bezeichnet. Anschlagflächen der Führungsmuffe 32, an denen das Synchronglied 54 in Drehrichtung anschlägt, sind in Fig. 2 mit 78 bezeichnet.

Der Anschlag kann auch zwischen den Sperrflächen 70 stattfinden.

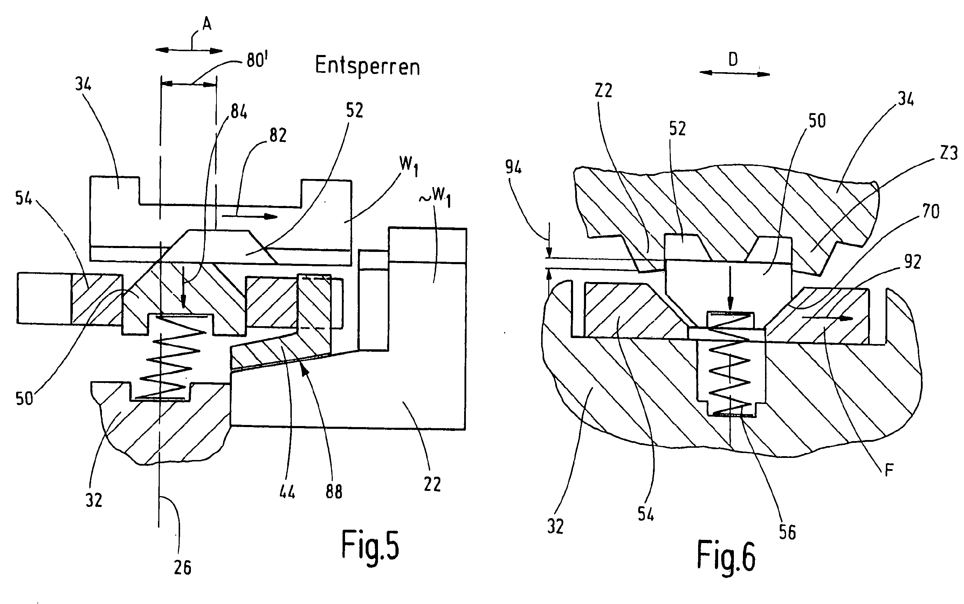

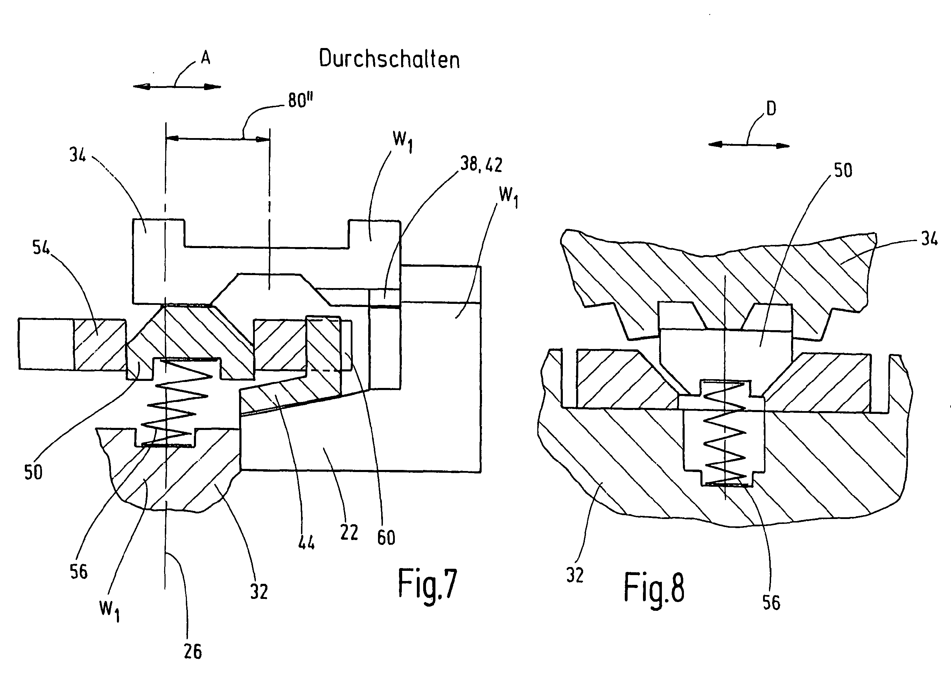

Die Funktionsweise der in den Figuren 1 und 2 dargestellten Schaltkupplungsanordnung 30 wird nachstehend anhand der Figuren 3 bis 8 im Detail erläutert, wobei in den Figuren 3 und 4 gezeigt ist, wie die Sperrmittel die Schaltmuffe 34 sperren und ein Durchschalten verhindern, solange keine Drehzahlgleichheit zwischen Welle 24 und Losrad 22 erzielt ist, wobei die Figuren 5 und 6 den Vorgang des Entsperrens zeigen, der ermöglicht wird, wenn auf Grund der Synchronität der Drehzahlen das Reibmoment zurückgeht, und wobei die Figuren 7 und 8 den geschalteten Zustand der Schaltkupplungsanordnung zeigen, bei dem das Losrad 22 und die Ausgangswelle 24 in Drehrichtung D formschlüssig miteinander über die Verzahnungen 38, 42 verbunden sind.

Wenn ausgehend von der in den Figuren 1 und 2 gezeigten Neutral- bzw. Freigabestellung die Schaltkupplungsanordnung 30 betätigt wird, um das Losrad 22 mit der Ausgangswelle 24 zu verbinden, wird über die Schaltgabel eine Axialkraft 82 (Schaltkraft) auf die Schaltmuffe 34 ausgeübt, die die Schaltmuffe 34 in Richtung hin zu dem Losrad 22 drückt.

Hierbei ist zunächst davon auszugehen, dass die Ausgangswelle 24 und damit die Führungsmuffe 32 und die in Drehrichtung formschlüssig hiermit verbundenen Bauteile Synchronglied 54 und Synchronring 44 eine erste Drehzahl ω₁ besitzen, und das Losrad 22 eine zweite, unterschiedliche Drehzahl ω₂.

Sofern die Schaltmuffe 34 in Fig. 3 nach rechts gedrückt wird (dies führt zu einem Schaltmuffenweg 80), werden über die erste Keilflächenpaarung 66 das Sperrglied 50, und über die axiale Kopplung auch das Synchronglied 54, in axialer Richtung mitgenommen, so dass die Andrückfläche 64 den Synchronring 44 axial an das Losrad 22 andrückt. Hierbei geraten die konischen Reibflächen 46, 48 in Reibeingriff. Auf Grund dessen wird das Synchronglied 54 von dem Synchronring 44 in Drehrichtung D mitgenommen, bis es an die Anschlagfläche 78 anschlägt (siehe Fig. 4). In diesem Zustand steht die zweite Keilflächenpaarung 70 in Eingriff, derart, dass ein Herunterdrücken des Sperrgliedes 50 in radialer Richtung R nicht möglich ist. Die über die Schaltmuffe 34 ausgeübte Schaltkraft ist in Fig. 3 mit 82 bezeichnet. Die hieraus über die erste Keilflächenpaarung 66 auf das Sperrglied 50 ausgeübte Radialkraft ist in Fig. 3 und 4 mit 84 bezeichnet, die hieraus auf das Sperrglied 50 ausgeübte Axialkraft mit 86. Die an der Reibpaarung 46, 48 entstehende Reibkraft ist schematisch mit 88 dargestellt, und die an der zweiten Keilflächenpaarung 70 entstehende Reibkraft in schematischer Weise mit 90.

In den Figuren 3 und 4 ist eine so genannte Sperrbedingung erfüllt, die ein Herabdrücken des Sperrgliedes 50 verhindert. Die Sperrbedingung ist in der dargestellten Schaltkupplungsanordnung eine Funktion des Rastierwinkels 68, des Sperrwinkels 70 und der tribologischen Eigenschaften. Ferner hängt der Sperrzustand natürlich auch von der über die Reibpaarung 46, 48 ausgeübte Reibkraft 88 ab.

Wenn sich nämlich die Drehzahlen aneinander angeglichen haben (ω₂ etwa gleich ω₁), ist die über die Reibflächenpaarung 46, 48 übertragene Reibkraft 88 relativ gering, so dass das Sperrglied 50 über die Keilflächenpaarung 66 nach unten gedrückt werden kann (Fig. 5). Hierbei wird zudem das Synchronglied 54 über die zweite Keilflächenpaarung 70 in die Freigabeposition F zurückgedrückt. Die hierzu erforderliche Rückführkraft ist in Fig. 6 schematisch mit 92 bezeichnet.

In Fig. 6 ist ferner zu erkennen, dass selbst dann, wenn das Sperrglied 50 vollständig aus der Rastiernut 52 herausgedrückt ist, nach wie vor eine axiale Führung des Sperrgliedes in axialer Richtung zwischen den Zähnen Z2, Z3 gegeben ist. Die Tiefe der zwischen diesen zwei Zähnen Z2, Z3 verbleibende Tiefe der zur axialen Führung verwendeten Radialnut ist in Fig. 6 schematisch mit 94 bezeichnet.

Nachdem das Sperrglied 50 vollständig aus der Rastiernut 52 herausgedrückt ist, wird auch keine Axialkraft mehr auf den Synchronring 44 übertragen. Die Schaltmuffe 34 befindet sich in einer so genannten "Freiflugphase", in der es sein kann, dass sich die Drehzahlen von Ausgangswelle 24 und Losrad 22 wieder voneinander entfernen. Diese Freiflugphase kann jedoch relativ kurz ausgebildet werden, da es konstruktionsbedingt möglich ist, die Führung der Schaltmuffe 34 an der nicht gezeigten Außenverzahnung der Führungsmuffe 32 bis nahe an den Kupplungskörper 40 heranzusetzen. Ferner kann auf Grund der erfindungsgemäßen Ausbildung der Schaltkupplungsanordnung 30 die Anspitzung der Verzahnung 38 relativ spitz ausgebildet werden, so dass ein schnelles Einspuren in die Außenverzahnung 42 des Kupplungskörpers 40 möglich ist. Der damit erreichte geschaltete Zustand ist in den Figuren 7 und 8 gezeigt.

Bei der in den Figuren 1 bis 8 beschriebenen Schaltkupplungsanordnung 30 weist der Synchronring 44 keine Sperrverzahnung auf. Auch ist es (abgesehen von der optional vorgesehenen dritten Keilflächenpaarung 96) nicht notwendig, an dem Synchronring 44 Keilflächen zum Realisierung der Sperrbedingung auszubilden. Die erforderlichen Keilflächenpaarungen 66, 70 sind ausschließlich zwischen den relativ massiven Bauelementen Schaltmuffe 34, Sperrglied 50 und Synchronglied 54 eingerichtet. Der Synchronring 44 muss folglich keine hohen Sperrkräfte übertragen und kann daher kostengünstig hergestellt werden, beispielsweise als Sinterteil.

Auch die Bauteile Synchronglied 54 und Sperrglied 50 können als einfache Bauteile gefertigt werden, beispielsweise als Sinterbauteile, als Blechteile oder als Schmiedeteile.

Auch die in die Schaltmuffe 34 einzubringende axiale Führungsnut 53 bzw. die Rastiernut 52 sind mit üblichen Werkzeugen zu realisieren.

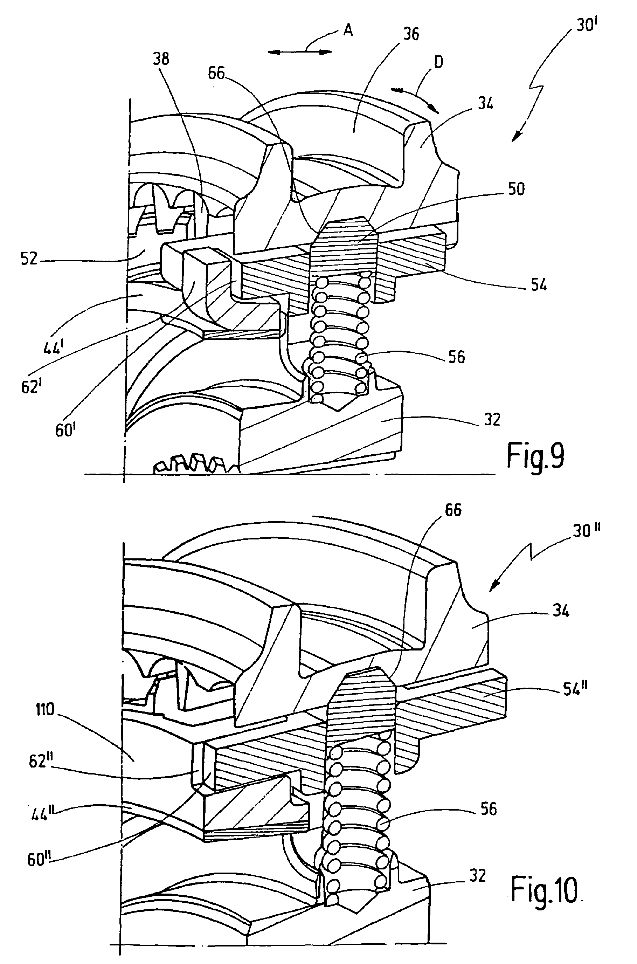

Nachstehend werden abgewandelte oder alternative Ausführungsformen von Schaltkupplungsanordnungen anhand der Figuren 9 bis 28 erläutert. All diese Ausführungsformen entsprechen hinsichtlich Aufbau und Funktionsweise generell der Schaltkupplungsanordnung 30 der Figuren 1 bis 8. Im Folgenden werden daher lediglich Unterschiede erläutert.

In Fig. 9 ist eine abgewandelte Ausführungsform gezeigt, bei der die Mitnahmemittel 60' des Synchrongliedes als Ausnehmung ausgebildet sind (wie bei der Ausführungsform der Figuren 1 bis 8), und wobei die Mitnahmemittel 62' des Synchronringes 44' als radiale Vorsprünge ausgebildet sind, die in die Ausnehmungen 60' greifen. Bei dieser Ausführungsform sind die radialen Vorsprünge 62' zudem getrennt von dem Konusring des Synchronringes 44' hergestellt und anschließend mit diesem verbunden.

Fig. 10 zeigt eine weitere alternative Ausführungsform, bei der der Synchronring 44' einen Synchronringträger 110 aufweist, in dem Ausnehmungen 62" (Mitnahmemittel) ausgebildet sind, in die axiale Vorsprünge 60" des Synchrongliedes 54" greifen.

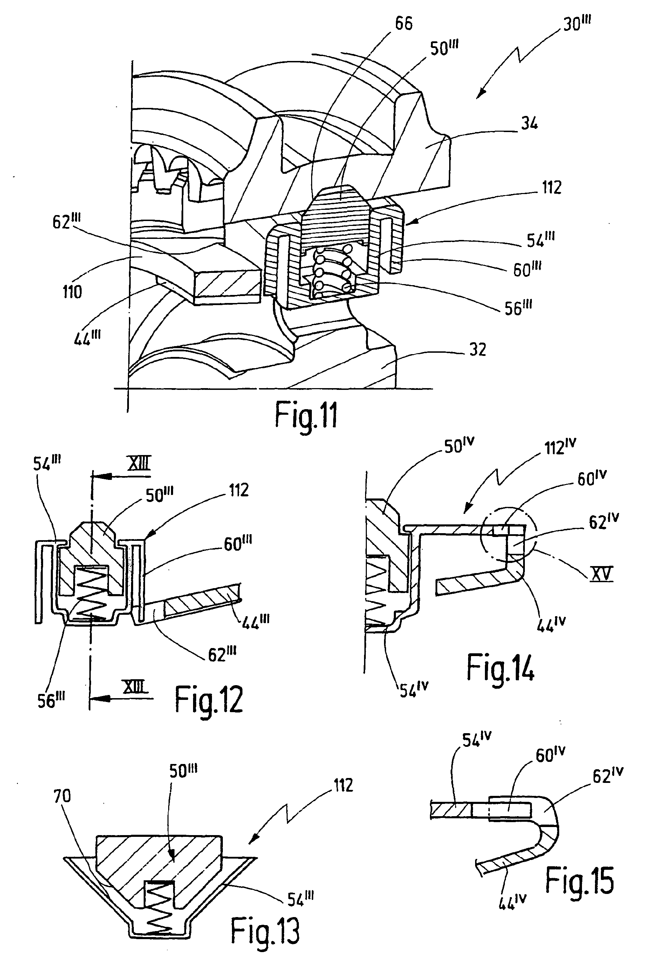

In Fig. 11 ist eine Ausführungsform gezeigt, bei der das Sperrglied 50"', das Synchronglied 54"' und die Federmittel 56'" als eine vormontierte Einheit 112 ausgebildet sind.

Genauer gesagt ist das Sperrglied 50"' in dem Synchronglied 54"' unverlierbar gelagert, und die Federmittel 56'" sind innerhalb des Synchrongliedes 54"' angeordnet. An dem Synchronglied 54"' sind ferner Vorsprünge 60"' ausgebildet, die nach der Art der Vorsprünge 60" der Fig. 10 in Ausnehmungen 62'" des Synchronringes 44'" greifen.

Das Synchronglied 54"' kann bei der Ausführungsform 30'" der Fig. 12 als Sinterteil oder als Blechbiegeteil ausgebildet sein.

Fig. 12 zeigt die vormontierte Einheit 112 der Fig. 11 in schematischer Form, wobei auch dargestellt ist, dass an dem Synchronglied 56'" Vorsprünge ausgebildet sind, die verhindern, dass das Sperrglied 50"' aus dem Synchronglied 56'" herausfällt.

Fig. 13 zeigt eine Schnittansicht entlang der Linie XIII-XIII der Fig. 12. Das Synchronglied 54'" kann, wie dargestellt, als Blechteil ausgebildet sein, wohingegen das Sperrglied 50"' als massives Bauteil ausgebildet sein kann, beispielsweise als Sinterbauteil.

Fig. 14 zeigt eine Modifikation der Ausführungsform 30"' der Figuren 11 bis 13, wobei an dem Synchronglied 54^{IV} der vormontierten Einheit 112^{IV} ein axialer Vorsprung mit einer Ausnehmung 60^{IV} ausgebildet ist, in die ein Vorsprung 62^{IV} des Synchronringes 44^{IV} greift (ähnlich wie bei der Ausführungsform der Figuren 1 bis 8).

Fig. 15 zeigt eine Detailansicht XV der Fig. 14 und zeigt beispielsweise eine relativ große Überdeckung zwischen den Mitnahmemitteln 60^{IV}, 62^{IV}.

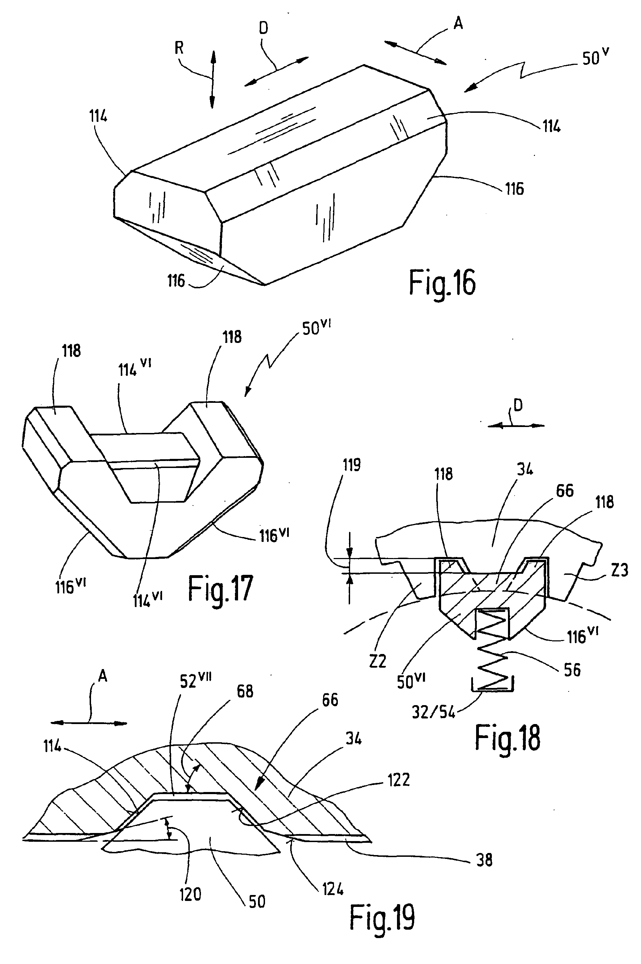

Fig. 16 zeigt eine Ausführungsform eines Sperrgliedes 50^{V}. Man erkennt in der Darstellung der Fig. 16, dass das Sperrglied 50^{V} erste, in Axialrichtung A gegenüberliegende Keilflächen 114 aufweist, die Teil der ersten Keilflächenpaarung 66 bilden. Ferner ist zu erkennen, dass das Sperrglied 50^{V} in Drehrichtung D gegenüberliegende zweite Keilflächen 116 aufweist, die jeweils Teil der zweiten Keilflächenpaarung 70 bilden.

In Fig. 17 ist eine Variante eines Sperrgliedes 50^{VI} gezeigt, das an seinen in Drehrichtung D gegenüberliegenden Enden jeweils sich in Axialrichtung A erstreckende Führungsnasen 118 aufweist, die in Radialrichtung R gegenüber einer Oberseite des Sperrgliedes vortreten.

Die Führungsnasen 118 sind dazu ausgelegt, in Zahnlücken der Innenverzahnung 38 einzugreifen, wie es beispielhaft in Fig. 18 gezeigt ist.

Mit dieser Ausgestaltung kann die Stabilität der axialen Führung deutlich verbessert werden, da sich in radialer Richtung ein Führungstiefenzuwachs 119 ergibt, der in Fig. 18 schematisch angedeutet ist.

Bei dieser Ausführungsform können sämtliche Zähne Z der Schaltmuffe 34 mit der gleichen Höhe, d.h. ohne Zahnrücknahme, ausgeführt werden, so dass der Innendurchmesser der Schaltmuffe 34 im Wesentlichen konstant sein kann (wie es in Fig. 18 schematisch durch einen gestrichelten Innendurchmesser angedeutet ist).

Fig. 19 zeigt eine abgewandelte Ausführungsform einer Rastiernut 52^{VII}. Die Rastiernut 52^{VII} weist zum einen Keilflächen 122 auf, die Teil der ersten Keilflächenpaarung 66 bilden. Am Übergang von den Keilflächen 122 zu der axial verlaufenden Verzahnung 38 sind Fasen 124 vorgesehen, die einen Fasenwinkel 120 aufweisen, der deutlich kleiner ist als der Rastierwinkel 68. Der Fasenwinkel kann beispielsweise im Bereich von 5° bis 40° liegen, insbesondere im Bereich von 10° bis 30°.

Mit den Fasen 124 kann beim Entsperren ein untersperrendes System erzeugt werden. Dies heißt mit anderen Worten, dass der Synchronring 44 nach wie vor etwas an das Losrad 22 angedrückt wird, während die Kante des Sperrgliedes an der Fase entlang gedrückt wird. Das Wiederbeschleunigen des Losrades 22 kann so besser verhindert werden. Die Freiflugphase kann mit anderen Worten kürzer ausgebildet werden. Der Fasenwinkel 120 wird jedoch vorzugsweise so gewählt, dass über ihn keine Sperrbedingung ausgelöst werden kann.

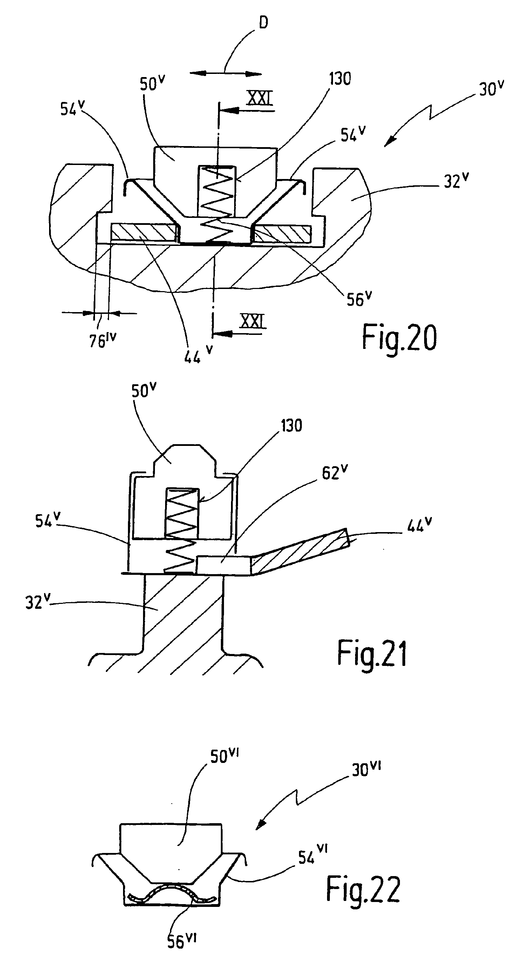

Fig. 20 zeigt eine der Fig. 2 entsprechende Darstellung einer weiteren Ausführungsform einer erfindungsgemäßen Schaltkupplungsanordnung 30^{V}. Das Synchronglied 54^{V} ist als Blechbiegeteil ausgebildet. Das Sperrglied 50^{V} weist an seiner radialen Innenseite eine Ausnehmung bzw. Vertiefung 130 zur Aufnahme und Führung der Federmittel 56^{V} (insbesondere in der gezeigten Ausführung als Schraubenfeder) auf.

Fig. 21 stellt eine Schnittansicht entlang der Linie XXI-XXI von Fig. 20 dar und zeigt, wie an dem Synchronring 44^{V} Mitnahmemittel 62^{V} ausgebildet sein können, die in eine Vertiefung des Synchrongliedes 54^{V} greifen.

Fig. 22 zeigt eine weitere Ausführungsform einer erfindungsgemäßen Schaltkupplungsanordnung 30^{VI}, wobei die Federmittel 56^{VI} als eine Art Tellerfeder oder Ähnliches ausgebildet sind.

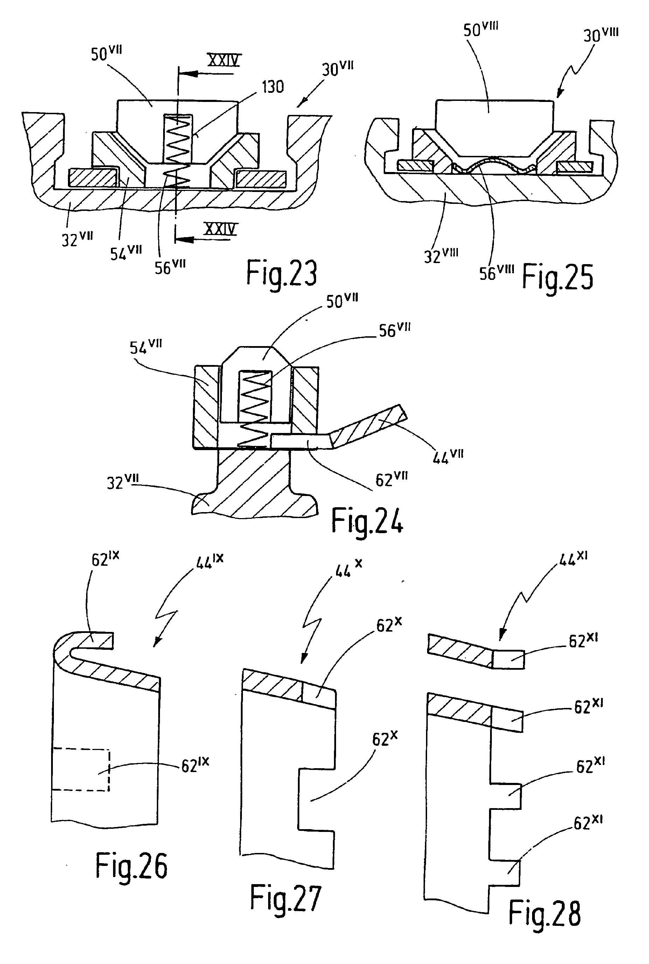

Die Fig. 23 und 24 zeigen eine weitere alternative Ausführungsform einer erfindungsgemäßen Schaltkupplungsanordnung 30^{VII}, wobei der grundsätzliche Aufbau und die grundsätzliche Funktion ähnlich ist wie bei der Schaltkupplungsanordnung 30^{V} der Fig. 20 und 21. Bei der Schaltkupplungsanordnung 30^{VII} ist das Synchronglied 54^{VII} jedoch nicht als Blechteil, sondern als massives Bauteil (beispielsweise als Sinterbauteil oder als Schmiedebauteil) ausgeführt.

Fig. 25 zeigt eine weitere Ausführungsform einer erfindungsgemäßen Schaltkupplungsanordnung 30^{VIII}, wobei, ähnlich wie bei der Ausführungsform der Fig. 22, als Federmittel 56^{VIII} eine Tellerfeder verwendet wird. Es versteht sich, dass bei Verwendung einer Tellerfeder an der radialen Innenseite des Sperrgliedes 50 keine Ausnehmung vorgesehen sein muss.

Die Fig. 26 bis 28 zeigen unterschiedliche Ausführungsformen von Synchronringen, die zur Verwendung in einer erfindungsgemäßen Schaltkupplungsanordnung geeignet sind. Insbesondere unterscheiden sich die Synchronringe gegenüber dem Stand der Technik dadurch, dass sie jeweils keine Sperrverzahnung aufweisen. Die Mitnahmemittel sind teils als radiale Vorsprünge 62^{IX} ausgebildet, alternativ als axiale Ausnehmungen 62^{X} oder als axiale Vorsprünge 62^{XI}. Es versteht sich, dass vorzugsweise mehrere der gezeigten Mitnahmemittel über den Umfang des jeweiligen Synchronringes verteilt angeordnet sind, vorzugsweise eine Anzahl von drei Mitnahmemitteln über den Umfang verteilt.

## Patentansprüche

1. Schaltkupplungsanordnung (30) zur drehfesten Verbindung einer Welle (24) mit einem daran gelagerten Drehglied (22), wobei die Schaltkupplungsanordnung (30) aufweist:
eine Schaltmuffe (34), die mit der Welle (24) drehfest verbunden, in Bezug auf die Welle (24) axial verschieblich gelagert und mit einer ersten Verzahnung (38) versehen ist,
einen Kupplungskörper (40), der mit dem Drehglied (22) drehfest verbunden und mit einer zweiten Verzahnung (42) versehen ist, die zur drehfesten Verbindung von Welle (24) und Drehglied (22) mit der ersten Verzahnung (38) in Eingriff bringbar ist, und
eine Sperr-Synchronisierungseinrichtung, die einen Synchronring (44) mit einer Reibfläche (46) aufweist, mittels dessen die Drehzahlen der Welle (24) und des Drehgliedes (22) synchronisierbar sind, bevor die erste und die zweite Verzahnung (38, 42) in Eingriff gebracht werden,
wobei die Sperr-Synchronierungseinrichtung ferner ein Sperrglied (50) aufweist, das mit der Schaltmuffe (34) über eine Rastiernut (52) gekoppelt ist und das mit dem Synchronring (44) in Drehrichtung (D) über eine Sperrflächenpaarung (70) gekoppelt ist,
und wobei die Sperrflächenpaarung (70) zwischen dem Sperrglied (50) und einem Synchronglied (54) ausgebildet ist, das in axialer Richtung (A) mit dem Sperrglied (50) und in Drehrichtung (D) mit dem Synchronring (62) gekoppelt ist, **dadurch gekennzeichnet,**
**dass** das Synchronglied (54) als ein von dem Sperrglied (50) und von dem Synchronring (44) getrenntes Bauteil ausgebildet ist.

2. Schaltkupplungsanordnung nach Anspruch 1, **dadurch gekennzeichnet, dass** das Synchronglied (54) in Drehrichtung (D) in Bezug auf eine mit der Welle (24) verbundene Führungsmuffe (32) zwischen einer Freigabeposition (F) und einer Sperrposition (S) begrenzt beweglich gelagert ist, derart, dass das Synchronglied (54) in der Sperrposition (S) eine Bewegung des Sperrgliedes (50) aus der Rastiernut (52) heraus und somit eine axiale Bewegung der Schaltmuffe (34) verhindert.

3. Schaltkupplungsanordnung nach Anspruch 1 oder 2, **dadurch gekennzeichnet, dass** der Synchronring (44) eine Ausnehmung (62"; 62"') aufweist, innerhalb der ein Abschnitt (60"; 60"") des Synchrongliedes (54) zur Kopplung mit dem Synchronring (44) in Drehrichtung (D) angeordnet ist.

4. Schaltkupplungsanordnung nach Anspruch 3, **dadurch gekennzeichnet, dass** die Ausnehmung (62"; 62"') des Synchronringes (44) als axiale Ausnehmung ausgebildet ist.

5. Schaltkupplungsanordnung nach einem der Ansprüche 1 bis 3, **dadurch gekennzeichnet, dass** der Synchronring (44) einen Vorsprung (62; 62') aufweist, der zur Kopplung mit dem Synchronglied 54 in Drehrichtung (D) in eine Ausnehmung (60; 60') des Synchrongliedes (54) greift.

6. Schaltkupplungsanordnung nach einem der Ansprüche 1 bis 5 oder nach dem Oberbegriff des Anspruches 1, **dadurch gekennzeichnet, dass** das Sperrglied (50) in axialer Richtung (A) an der Schaltmuffe (34) geführt ist.

7. Schaltkupplungsanordnung nach Anspruch 6, **dadurch gekennzeichnet, dass** die Schaltmuffe (34) eine radiale Ausnehmung (53) aufweist, in der das Sperrglied (50) axial geführt ist.

8. Schaltkupplungsanordnung nach Anspruch 6 oder 7, **dadurch gekennzeichnet, dass** das Sperrglied wenigstens eine Führungsnase (118) aufweist, die zur axialen Führung an der Schaltmuffe (34) in eine Zahnlücke der ersten Verzahnung (38) greift.

9. Schaltkupplungsanordnung nach einem der Ansprüche 1 bis 8, **dadurch gekennzeichnet, dass** das Sperrglied (50) in radialer Richtung (R) gegenüber der Welle (24) oder der Führungsmuffe (32) elastisch vorgespannt ist und in die Rastiernut (52) gedrückt ist.

10. Schaltkupplungsanordnung nach einem der Ansprüche 1 bis 9, **dadurch gekennzeichnet, dass** das Sperrglied (50) in radialer Richtung (R) gegenüber dem Synchronglied (54) elastisch vorgespannt ist und in die Rastiernut (52) gedrückt ist.

11. Schaltkupplungsanordnung nach Anspruch 10, **dadurch gekennzeichnet, dass** das Sperrglied (SO) eine Ausnehmung (130) zur Aufnahme eines Federelementes (56) zur Realisierung der elastischen Vorspannung aufweist.

12. Schaltkupplungsanordnung nach einem der Ansprüche 1 bis 11, **dadurch gekennzeichnet, dass** das Sperrglied (50) und das Synchronglied (54) als eine vormontierte Einheit (112) ausgebildet sind:

13. Schaltkupplungsanordnung nach Anspruch 12, **dadurch gekennzeichnet, dass** die vormontierte Einheit (112) Federmittel (56) zur elastischen Vorspannung des Sperrgliedes (50) gegenüber dem Synchronglied (54) aufweist.

14. Schaltkupplungsanordnung nach einem der Ansprüche 1 bis 13, **dadurch gekennzeichnet, dass** das Sperrglied (50) und/oder das Synchronglied (54) als Sinterteil. ausgebildet sind.

15. Schaltkupplungsanordnung nach einem der Ansprüche 1 bis 14, **dadurch gekennzeichnet, dass** die Rastiernut (52) eine Sperrfläche (122) und eine Fase (124) am Übergang von der Sperrfläche (122) zu der ersten Verzahnung (38) aufweist.

## Claims

1. A clutch assembly (30) for connecting a shaft (24) to a rotary member (22) mounted thereon for joint rotation therewith, the clutch assembly (30) comprising:
a sliding sleeve (34) which is connected to the shaft (24) for joint rotation therewith, is mounted for axial displacement in relation to the shaft (24), and is provided with a first gearing (38);
a clutch body (40) which is connected to the rotary member (22) for joint rotation therewith and is provided with a second gearing (42) which can be caused to engage with the first gearing (38) to connect the shaft (24) and the rotary member (22) for joint rotation; and
a locking synchronisation unit including a synchroniser ring (44) which has a friction surface (46) and permits the speeds of the shaft (24) and of the rotary member (22) to be synchronised before the first and second gearings (38, 42) are caused to engage,
the locking synchronisation unit further including a locking member (50) which is coupled to the sliding sleeve (34) by means of a detent groove (52) and is coupled to the synchroniser ring (44) in the rotational direction (D) by means of a pair of locking surfaces (70),
and the pair of locking surfaces (70) being formed between the locking member (50) and a synchroniser member (54) which is coupled to the locking member (50) in the axial direction (A) and to the synchroniser ring (62) in the rotational direction (D), **characterized in that**
the synchroniser member (54) is formed as a component that is separate from the locking member (50) and from the synchroniser ring (44).

2. The clutch assembly according to claim 1, **characterized in that** the synchroniser member (54) is mounted for limited movement between a release position (F) and a locking position (S) in the rotational direction (D) with respect to a guiding sleeve (32) connected to the shaft (24), such that the synchroniser member (54), when in the locking position (S), prevents movement of the locking member (50) out of the detent groove (52) and thus an axial movement of the sliding sleeve (34).

3. The clutch assembly according to claim 1 or 2, **characterized in that** the synchroniser ring (44) has a recess (62"; 62"') within which a portion (60"; 60"') of the synchroniser member (54) is arranged for coupling to the synchroniser ring (44) in the rotational direction (D).

4. The clutch assembly according to claim 3, **characterized in that** the recess (62"; 62"') of the synchroniser ring (44) is formed as an axial recess.

5. The clutch assembly according to any of claims 1 to 3, **characterized in that** the synchroniser ring (44) includes a protrusion (62; 62') which, for being coupled to the synchroniser member (54) in the rotational direction (D), engages in a recess (60; 60') of the synchroniser member (54).

6. The clutch assembly according to any of claims 1 to 5 or according to the preamble of claim 1, **characterized in that** the locking member (50) is guided at the sliding sleeve (34) in the axial direction (A).

7. The clutch assembly according to claim 6, **characterized in that** the sliding sleeve (34) includes a radial recess (53) in which the locking member (50) is axially guided.

8. The clutch assembly according to claim 6 or 7, **characterized in that** the locking member has at least one guiding nose (118) which, for axial guidance at the sliding sleeve (34), engages in a tooth gap of the first gearing (38).

9. The clutch assembly according to any of claims 1 to 8, **characterized in that** the locking member (50) is elastically biased in the radial direction (R) with respect to the shaft (24) or the sliding sleeve (32) and is pressed into the detent groove (52).

10. The clutch assembly according to any of claims 1 to 9, **characterized in that** the locking member (50) is elastically biased in the radial direction (R) with respect to the synchroniser member (54) and is pressed into the detent groove (52).

11. The clutch assembly according to claim 10, **characterized in that** the locking member (50) includes a recess (130) for receiving a spring member (56) for realizing the elastic biasing.

12. The clutch assembly according to any of claims 1 to 11, **characterized in that** the locking member (50) and the synchroniser member (54) are formed as a pre-assembled unit (112).

13. The clutch assembly according to claim 12, **characterized in that** the pre-assembled unit (112) includes spring means (56) for elastically biasing the locking member (50) with respect to the synchroniser member (54).

14. The clutch assembly according to any of claims 1 to 13, **characterized in that** the locking member (50) and/or the synchroniser member (54) is/are formed as a sintered part.

15. The clutch assembly according to any of claims 1 to 14, **characterized in that** the detent groove (52) includes a locking surface (122) and a chamfer (124) at the transition from the locking surface (122) to the first gearing (38).

## Revendications

1. Système d'embrayage (30) pour relier de manière solidaire en rotation un arbre (24) avec un organe rotatif (22) monté sur celui-ci, le système d'embrayage (30) présentant:
un baladeur (34) qui est relié solidaire en rotation à l'arbre (24), monté en translation axiale par rapport à l'arbre (24) et pourvu d'une première denture (38),
un corps d'embrayage (40) qui est relié solidaire en rotation avec l'organe rotatif (22) et qui est pourvu d'une deuxième denture (42) qui peut être mise en prise avec la première denture (38) pour relier de manière solidaire en rotation l'arbre (24) et l'organe rotatif (22), et
un dispositif de synchronisation de blocage qui présente une bague de synchronisation (44) avec une surface de friction (46) au moyen de laquelle les vitesses de rotation de l'arbre (24) et de l'organe rotatif (22) peuvent être synchronisés avant que la première et la deuxième denture (38, 42) soient mises en prise,
le dispositif de synchronisation de blocage présentant en outre un organe de blocage (50) qui est couplé au baladeur (34) via une rainure d'encliquetage 852) et qui est couplé à la bague de synchronisation (44) en direction de rotation (D) via un appariement de surfaces de blocage (70)
et l'appariement de surfaces de blocage (70) étant réalisé entre l'organe de blocage (50) et un organe de synchronisation (54) qui est couplé en direction axiale (A) à l'organe de blocage (50) et en direction de rotation (D) à la bague de synchronisation (62), **caractérisé en ce que**
l'organe de synchronisation (54) est réalisé en tant que composant séparé de l'organe de blocage (50) et de la bague de synchronisation (44).

2. Système d'embrayage selon la revendication 1, **caractérisé en ce que** l'organe de synchronisation (54) est monté de manière mobile limitée en direction de rotation (D) entre une position de libération (F) et une position de blocage (S), par rapport à un manchon de guidage (32) relié à l'arbre (24), de telle sorte que dans la position de blocage (S), l'organe de synchronisation (54) empêche un mouvement de l'organe de blocage (50) hors de la rainure d'encliquetage (52) et ainsi un mouvement axial du baladeur (34).

3. Système d'embrayage selon la revendication 1 ou 2, **caractérisé en ce que** la bague de synchronisation (44) présente un évidement (62" ; 62"') à l'intérieur duquel est agencé un tronçon (60" ; 60"') de l'organe de synchronisation (54) pour l'accouplement avec la bague de synchronisation (44) dans le sens de rotation (D).

4. Système d'embrayage selon la revendication 3, **caractérisé en ce que** l'évidement (62" ; 62"') de la bague de synchronisation (44) est réalisé sous forme d'évidement axial.

5. Système d'embrayage selon l'une des revendications 1 à 3, **caractérisé en ce que** la bague de synchronisation (44) présente une saillie (62 ; 62') qui s'engage dans un évidement (60 ; 60') de l'organe de synchronisation (54) pour l'accouplement avec l'organe de synchronisation (54) en direction de rotation (D).

6. Système d'embrayage selon l'une des revendications 1 à 5 ou selon le préambule de la revendication 1, **caractérisé en ce que** l'organe de blocage (50) est guidé en direction axiale (A) sur le baladeur (34).

7. Système d'embrayage selon la revendication 6, **caractérisé en ce que** le baladeur (34) présente un évidement (53) radial dans lequel l'organe de blocage (50) est guidé axialement.

8. Système d'embrayage selon la revendication 6 ou 7, **caractérisé en ce que** l'organe de blocage présente au moins un ergot de guidage (118) qui s'engage dans un entredent de la première denture (38) pour le guidage axial sur le baladeur (34).

9. Système d'embrayage selon l'une des revendications 1 à 8, **caractérisé en ce que** l'organe de blocage (50) est précontraint élastiquement en direction radiale (R) par rapport à l'arbre (24) ou au manchon de guidage (32) et est pressé dans la rainure d'encliquetage (52).

10. Système d'embrayage selon l'une des revendications 1 à 9, **caractérisé en ce que** l'organe de blocage (50) est précontraint élastiquement en direction radiale (R) par rapport à l'organe de synchronisation (54) et est pressé dans la rainure d'encliquetage (52).

11. Système d'embrayage selon la revendication 10, **caractérisé en ce que** l'organe de blocage (50) présente un évidement (130) pour recevoir un élément ressort (56) pour réaliser la précontrainte élastique.

12. Système d'embrayage selon l'une des revendications 1 à 11, **caractérisé en ce que** l'organe de blocage (50) et l'organe de synchronisation (54) sont réalisés sous forme d'une unité (112) préassemblée.

13. Système d'embrayage selon la revendication 12, **caractérisé en ce que** l'unité (112) préassemblée présente des moyens de ressort (56) pour précontraindre élastiquement l'organe de blocage (50) par rapport à l'organe de synchronisation (54).

14. Système d'embrayage selon l'une des revendications 1 à 13, **caractérisé en ce que** l'organe de blocage (50) et/ou l'organe de synchronisation (54) sont réalisés sous forme de pièces frittées.

15. Système d'embrayage selon l'une des revendications 1 à 14, **caractérisé en ce que** la rainure d'encliquetage (52) présente une surface de blocage (122) et un chanfrein (124) à la transition de la surface de blocage (122) vers la première denture (38).
